# EUROPEAN PATENT APPLICATION

(11) **EP 3 477 427 A1**
(43) Date of publication of application: **01.05.2019**
(21) Application number: 17306491.6
(22) Date of filing: 30.10.2017
(51) Int. Cl.: G06F 1/30

(54) **EARLY DETECTION OF POWER SUPPLY FAILURE COMBINED WITH PREMATURE SWITCHING TO A BACKUP POWER SUPPLY**

(71) Applicant: THOMSON LICENSING, 92130 Issy les Moulineaux (FR)
(72) Inventor: KELLER, Tony, 8048 Zürich (CH)
(74) Representative: Huchet, Anne

(57) **Abstract**

The present disclosure relates to a method adapted to be performed in an electronic device including a power consuming element, and a power storing element adapted to store power when the power consuming element is in an operational state.

According to the present disclosure, the method comprises controlling a switching of the power consuming element to the operational state upon detecting an event that may result in a power supplying failure, so as to permit to the storing element to store power before an occurrence of a power failure.

The present disclosure also relates to corresponding device, system, computer readable program product and computer readable storage medium.

## Description

### 1. Technical field

The present disclosure relates to the field of electronic devices, either wired or wireless electronic devices, and/or notably to electronic devices used for processing audio and/or video contents. It concerns for instance electronic devices used for rendering an audio and/or video content, like a TV set, a display or an audio renderer, and/or devices adapted to transmit an audio and/or video content to such a rendering device, like a Set Top Box (STB) or a Gateway (GTW).

A method for controlling a device and corresponding device, electronic assembly, system, computer readable program product and computer readable storage medium are described.

### 2. Background art

Local or domestic environments often encompass many electronic devices, notably devices for processing (for instance acquiring, receiving, transmitting and/or rendering) an audio and/or video content. Such electronic devices can include interconnection devices (like gateways or repeaters), and end-devices like set-top-boxes (STB), smartphones, tablets, personal computers or peripherals like speakers (or audio renderers) or microphones that have become widely used nowadays.

There is need for a solution that permits enhancing the behavior of such an electronic device, for providing a user with a more safety and reliable environment, notably in case of emergency situations.

### 3. Summary

The present principles enable at least one of the above disadvantages to be resolved by proposing a method adapted to be performed in an electronic device comprising at least one power consuming element and at least one power storing element adapted to store power when said power consuming element is in an operational state.

According to an embodiment of the present disclosure, the method comprises controlling a switching of said power consuming element to the operational state upon detecting an event that may result in a power supplying failure, so as to permit to said power storing element to store power before an occurrence of a power failure.

According to an embodiment of the present disclosure, said power storing element is associated to said power consuming element. Notably, said power storing element can be adapted to store power necessary to said power consuming element.

According to another aspect, the present disclosure relates to an electronic device comprising at least one power consuming element, at least one power storing element being adapted to store power when said power consuming element is in an operational state and at least one processor.

According to an embodiment of the present disclosure, said at least one processor is configured for controlling a switching of said power consuming element to the operational state upon detecting an event that may result in a power supplying failure, so as to permit to said storing element to store power before an occurrence of a power failure.

According to an embodiment of the present disclosure, said at least one processor is configured for disabling said power consuming element of said electronic device in case of power supplying failure, while keeping an emergency circuitry of said electronic device in an operational state, said emergency circuitry being adapted to generate an alert relating to said event.

Notably, said at least one processor can be located in said emergency circuitry.

According to an embodiment of the present disclosure, said at least one processor is configured for controlling a power adaptor element of said electronic device, said power adaptor element being adapted to receive power stored by said power storing element and to supply power to said emergency circuitry.

According to an embodiment of the present disclosure, said emergency circuitry is a low power consuming circuitry.

According to an embodiment of the present disclosure, said at least one processor is configured for generating a first alert by using said power consuming element when mains is still supplied and for generating a second alert using said emergency circuitry in case of power failure.

According to an embodiment of the present disclosure, generating said first alert comprises rendering an alarm on an output interface of said electronic device.

According to an embodiment of the present disclosure, generating said first and/or said second alert comprises sending an alert message via at least one first communication interface of said electronic device.

According to an embodiment of the present disclosure, said first communication interface is consuming less power than a second communication interface of said electronic device.

According to an embodiment of the present disclosure, said alert message comprises information about at least one user of said electronic device. The at least one user can notably be a user present nearby or logged to said electronic device at the time of said detecting of said event.

According to an embodiment of the present disclosure, said power consuming element comprises an element with audio and /or video processing capabilities, a display and/or a microprocessor.

While not explicitly described, the electronic device of the present disclosure can be adapted to perform the method of the present disclosure in any of its embodiments.

According to another aspect, the present disclosure relates to an electronic device comprising at least one power consuming element, at least one power storing element being adapted to store power when said power consuming element is in an operational state and at least one processing circuitry.

According to an embodiment of the present disclosure, said at least one processing circuitry is adapted for controlling a switching of said power consuming element to the operational state upon detecting an event that may result in a power supplying failure, so as to permit to said storing element to store power before an occurrence of a power failure.

According to an embodiment of the present disclosure, said at least one processing circuitry is configured for disabling said power consuming element of said electronic device in case of power supplying failure, while keeping an emergency circuitry of said electronic device in an operational state, said emergency circuitry being adapted to generate an alert relating to said event.

Notably, said processing circuitry can be located in said emergency circuitry.

According to an embodiment of the present disclosure, said at least one processor is configured for controlling a power adaptor element of said electronic device, said power adaptor element being adapted to receive power stored by said power storing element and to supply power to said emergency circuitry.

According to an embodiment of the present disclosure, said emergency circuitry is a low power consuming circuitry.

According to an embodiment of the present disclosure, said at least one processing circuitry is configured for generating a first alert by using said power consuming element when mains is still supplied and for generating a second alert using said emergency circuitry in case of power failure.

According to an embodiment of the present disclosure, generating said first alert comprises rendering an alarm on an output interface of said electronic device.

According to an embodiment of the present disclosure, generating said first and/or said second alert comprises sending an alert message via at least one first communication interface of said electronic device.

According to an embodiment of the present disclosure, said first communication interface is consuming less power than a second communication interface of said electronic device.

According to an embodiment of the present disclosure, said alert message comprises information about at least one user of said electronic device.

According to an embodiment of the present disclosure, said power consuming element comprises an element with audio and /or video processing capabilities, a display and/or a microprocessor.

While not explicitly described, the electronic device of the present disclosure can be adapted to perform the method of the present disclosure in any of its embodiments.

According to another aspect, the present disclosure relates to an electronic assembly comprising:
- a first electronic device comprising at least one power consuming element, at least one power storing element being adapted to store power when said power consuming element is in an operational state, and at least one processor;
- at least one sensor adapted to transmit to said first electronic device at least one information representative of a detection of said event.

According to another aspect, the present disclosure said at least one processor is configured for controlling a switching of said power consuming element to the operational state upon detecting an event that may result in a power supplying failure, so as to permit to said storing element to store power before an occurrence of a power failure.

While not explicitly described, the electronic assembly of the present disclosure can be adapted to perform the method of the present disclosure in any of its embodiments.

While not explicitly described, the present embodiments related to a method or to the corresponding electronic device, electronic assembly or system can be employed in any combination or sub-combination.
For example, some embodiments of the method of the present disclosure can involve said emergency circuitry generating a first alert by using a display of the electronic device when mains is still supplied and generating a second alert, in case of power failure, without using the display, generating said first and/or said second alert comprising sending an alert message comprising information about at least one user of said electronic device.

According to another aspect, the present disclosure relates to a non-transitory program storage product, readable by a computer.

According to an embodiment of the present disclosure, said non-transitory computer readable program product tangibly embodies a program of instructions executable by a computer to perform the method of the present disclosure in any of its embodiments.

According to an embodiment of the present disclosure, said non-transitory computer readable program product tangibly embodies a program of instructions executable by a computer for performing, when said non-transitory software program is executed by a computer, a method adapted to be performed in an electronic device comprising at least one power consuming element, and at least one power storing element adapted to store power when said power consuming element is in an operational state, said method comprising controlling a switching of said power consuming component to its operational state upon detecting an event that may result in a power supplying failure, so as to permit to said storing element to store power before an occurrence of a power failure.

According to another aspect, the present disclosure relates to a computer readable storage medium carrying a software program comprising program code instructions for performing the method of the present disclosure, in any of its embodiments, when said non-transitory software program is executed by a computer.

According to an embodiment of the present disclosure, said computer readable storage medium tangibly embodies a program of instructions executable by a computer for performing, when said non-transitory software program is executed by a computer, a method a method adapted to be performed in an electronic device comprising at least one power consuming element, and at least one power storing element adapted to store power when said power consuming element is in an operational state, said method comprising controlling a switching of said power consuming component to its operational state upon detecting an event that may result in a power supplying failure, so as to permit to said storing element to store power before an occurrence of a power failure.

### 4. List of drawings.

The present disclosure can be better understood, and other specific features and advantages can emerge upon reading the following description, the description making reference to the annexed drawings wherein:
- Figure 1 shows an example of a system belonging to a home communication network according to an exemplary embodiment of the present disclosure;
- Figure 2 gives an overview of a functional structure of an electronic device, like the electronic devices 110, 130, 140 or 170 of figure 1;
- Figure 3 illustrates a first block diagram, according to a first embodiment, based on the functional structure of the electronic device 20 of figure 2, emphasizing on the roles of some elements of the electronic device, in link with some embodiments of the present disclosure;
- Figure 4 illustrates a diagram of the state of the electronic device 20 of figure 2 in some embodiments of the present disclosure;
- Figure 5 illustrates an exemplary succession of states, as illustrated by figure 4, in case of an occurrence of an earthquake, in some embodiments of the present disclosure;
- Figure 6 illustrates an embodiment of the method of the present disclosure performed, for instance, in the electronic device 20 of figure 2;
- Figure 7 illustrates a second block diagram, according to a second embodiment of the present disclosure, based on the functional structure of the electronic device 20; and
- Figure 8 illustrates a third block diagram, according to a third embodiment of the present disclosure.

It is to be noted that the drawings illustrate exemplary embodiments and that the embodiments of the present disclosure are not limited to the illustrated embodiments.

### 5. Detailed description of the embodiments.

The present disclosure proposes a way of preserving power, inside an electronic device, upon detection of a risk of power failure. In case of emergency situations notably, especially emergency situations that may have an impact on the supplying of mains to an electronic device, the present disclosure can thus permit to use the electronic device as a mean to cope with the emergency situation, for the generation of an alert for instance.

Indeed, many alarm systems are based on the hypothesis that the device that propagates the alarm stays itself operational. This can be the case for some alarms (for instance in case of a medical emergency) or for battery powered devices. However, in some other situations (like earthquake) the device which is relied upon for propagating the alarm can run rapidly out of power (notably if the device is not equipped with a battery) and thus be unable to propagate the alarm. The present disclosure proposes to harvest power from the mains as long as it is present, while keeping the device in a low power consuming mode, in order to help the device to behave autonomously for an increased time (compared to prior art solutions) in case of a power failure.

The present disclosure can also apply in other situations where a device, having a critical role to play and thus being supposed to stay always at least partially operational, encounters (even temporary) a blackout of its mains voltage. An exemplary use case can be an alerting device in a bank environment. Pressing a low level alarm button in view of an abnormal behavior of a client may permit a bank employee to indicate to the alerting device a risk of holdup, in order for the alerting device to cumulate power and thus be capable of working autonomously for a while in case of an upcoming turn off of the mains by the robbers.

At least one embodiment of the present disclosure offers a way of limiting (or in other terms controlling) the power consumed by the electronic device as soon as the power failure is detected (i.e. when a risk appears for the device of not being supplied by any external source of power). The limitation of the power consumption of the electronic device can notably be obtained by aborting a service (also called herein "action" or "function") currently performed by the electronic device and having a high impact on the total power consumption of the electronic device. At least one embodiment of the present disclosure proposes to disable temporarily at least one power consuming element (or component) of the electronic device essential to such a service. In some embodiments, it can be for instance a software component managing the service, or invoking the service, or a hardware component of the electronic device very greedy in terms of power consumption. Such a component can be a component involved in an audio and/or video processing and/or rendering, like a Graphical Processing Unit (GPU), a display, a high-power transmitting unit (like a WI-FI or Long-Term Evolution (LTE) transmitter) currently used for a phone call or a transmission of a large file for instance, or a loudspeaker.

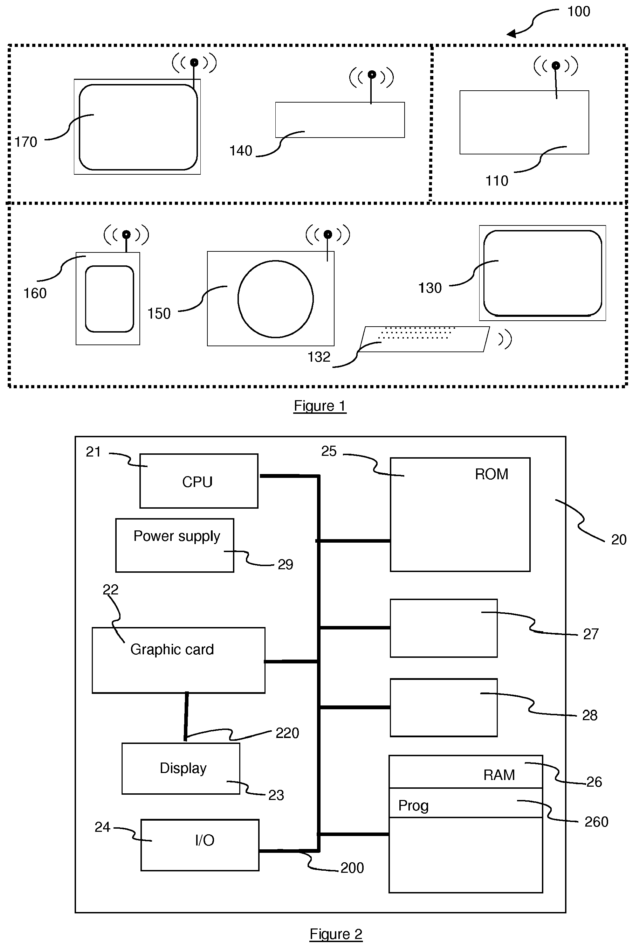

A particular embodiment is now described, in link with a communication system 100 illustrated by figure 1.

In the embodiment illustrated by figure 1, the communication system 100 is located in a domestic environment (for instance a home environment). The electronic devices of the system can exchange data inside a communication network, for instance a local area network (LAN), thanks to wired communication interfaces (like Ethernet interface) or wireless communication interfaces, like WIFI® or Bluetooth® interfaces.

The communication system can notably comprise one or several gateway(s) 110, giving access to at least one other communication network, like a Wide Area Network (WAN). Notably, a gateway 110 can give access to a Broadcast Network or to a Broadband Network, like the Internet Network. For instance, it can receive and/or transmit data from a broadcast network (for instance from TV operators) or from/to a broadband network like Internet. Thus, the devices of the system 100 can receive and/or transmit data, notably audiovisual data, via the gateway, from/to those broadcast and/or broadband networks.

The communication system 100 can also include at least one other electronic device, notably an electronic device adapted to process an audiovisual signal, like a Set Top Box (STB) 140, a tablet 160, a PC, a smartphone, a Blue-ray player, a TV Set (130, 170), an/or an audio renderer 150.

The presence of a GTW is optional. Indeed, at least one of the other electronic devices can be equipped itself with an access point (like a 3G or 4G interface) enabling access to a broadcast and/or broadband network.

At least some of the electronic devices (like the TV set 130) of the communication system 100 can be controlled via a remote-control device 132 as illustrated by figure 1.

In the embodiment illustrated in figure 1, the system can be distributed in different rooms of the domestic environment. For instance, the system can comprise a gateway (GW) 110 located in a first room, a first TV set 170 and a Set Top Box 140 located in a second room, and a second TV Set 130 located in a third room. Of course, the figure has only an exemplary purpose.

Audio and/or video processing can be very greedy in terms of power consumption. It can be the case for instance when an electronic device, like the STB 140, is receiving video data in streaming from a gateway 110, via its wireless interface, while decoding the received video data before transmission for display to the TV Set 170 via an HDMI interface. At the same time, some time-shift functions, involving read and write access to a memory, can also be performed for the display of the video.

At least some embodiment of the present disclosure proposes to monitor in an electronic device like one of the electronic devices 110, 130, 140 or 170 of figure 1, the receiving, from at least one sensor or other input interface, of at least one information representative of an event that can lead to a mains failure, in order to detect a risk of an imminent occurrence of power delivery failure. The electronic device can thus start cumulating power, while monitoring the receiving of the mains, in order to react immediately (or at least at soon as possible) in case of a power failure and to disable consequently at least some power consuming elements of the electronic device, so as to preserve the power of the electronic device as long as possible.

Figure 2 describes the structure of an electronic device 20 that can be configured notably to perform one or several of the embodiments of the method of the present disclosure. It is to be pointed out that the elements, or module, or blocks, or circuitry, or components of the functional structure illustrated of figure 2 can be implemented thanks to software components of the electronic device and/or thanks to hardware components of the electronic device. At least some elements illustrated by figure 2 can comprise both at least one software component and at least one hardware component of the electronic device.

The electronic device can be any electronic device with input and/or output means and processing means, like a smart phone, a personal computer, a tablet, a TV, a STB or a microphone (as devices 110, 130, 140 or 170 of figure 1). The device can have itself sensing capabilities (for instance one or more web cam, microphones, temperature sensor, earth vibration sensor...) or be connected to such a sensor or to a monitoring unit, adapted to control and /or monitor the state of some devices inside the user environment.

In the exemplary embodiment of figure 2, the electronic device 20 can include different devices, linked together via a data and address bus 200, which can also carry a timer signal. For instance, it can include one or more micro-processor 21 (or Central Processing Units (CPU)), notably a Graphic Processing Unit (GPU) (depending on embodiments, such graphic processing unit may be optional), a ROM (or « Read Only Memory ») 25, a RAM (or « Random Access Memory ») 26, at least one Input/ Output module 24 (like a microphone, a loudspeaker, a tactile display, a switch, a led, a button, and so on)).

In the exemplary embodiment of figure 2, the electronic device can also comprise at least one communication interface 27 configured for the reception and/or transmission of data, notably audio and/or video data, like an audio and /or a video stream, or information regarding monitored events. The communication interface can transmit and/or receive data via a wireless connection (notably of type WIFI® or Bluetooth® or being a Long Range Wide Area Network (LoRaWAN) interface), and/or at least one wired communication interface 28. Those communication interfaces are optional. Indeed, in some embodiments, the electronic device can acquire itself some information regarding some monitored events.

In the exemplary embodiment of figure 2, the electronic device can also comprise at least one power supply 29.

In some embodiments, the electronic device 20 can also include, or be connected to, a display module 23, for instance a screen, directly connected to the graphics card 22 by a dedicated bus 220. The graphic card can be equipped with a graphic processing unit notably.

The Input/ Output audio module 24, and optionally the display module, can be used for instance in order to output information, as described in link with the rendering or alert generating steps of the method of the present disclosure described hereinafter.

The electronic device 20 can communicate with another device located in the same Local Area Network (LAN) than the electronic device 20 (notably located in another room of the domestic environment), and/or with another device accessible through a Wide Area Network (WAN) thanks to a wireless interface 27.

In the illustrated embodiment, the electronic device 20 communicates with other devices of the domestic communication network (notably with the gateway or with the STB) using mainly at least one wireless interface (like for instance a Wi-Fi or a Bluetooth interface). The electronic device 20 communicates with devices belonging to another communication network, via at least one wired or wireless interface (like for instance a LoRaWAN interface).

Each of the mentioned memories can include at least one register, that is to say a memory zone of low capacity (a few binary data) or high capacity (with a capability of storage of an entire audio and/or video file notably).

When the electronic device 20 is powered on, by a power source (like the mains), the microprocessor 21 loads the program instructions 260 in a register of the RAM 26, notably the program instruction needed for performing at least one embodiment of the method described herein, and executes the program instructions.

Depending upon embodiments, the electronic device 20 includes one or several microprocessors.

According to another variant, the power supply 29 is external to the electronic device 20.

In the exemplary embodiment illustrated in figure 2, the microprocessor 21 can be configured for controlling a switching of a power consuming element of said electronic device to an operational state upon detecting an event that may result in a power supplying failure, so as to permit to at least one power storing element of the electronic device, the power storing element being adapted to store power when the power consuming element is in the operational state, to store power before an occurrence of a power failure.

It is to be pointed out that several electronic devices of the domestic environment of figure 100 can implement an embodiment of the method of the disclosure. Notably, in case of an occurrence of an event, a chain reaction can happen. A first electronic device can react to a detecting of the occurrence of the event, by switching to an operational state at least one of its power consuming component and by generating a first alert and propagate this first alert, through its communication interface, to a second electronic device of the domestic environment, where this incoming alert will in turn be considered as the occurrence of an event by the second electronic device, that can then react by switching to an operational state at least one of its own power consuming component and by generating another alert, and so on ...

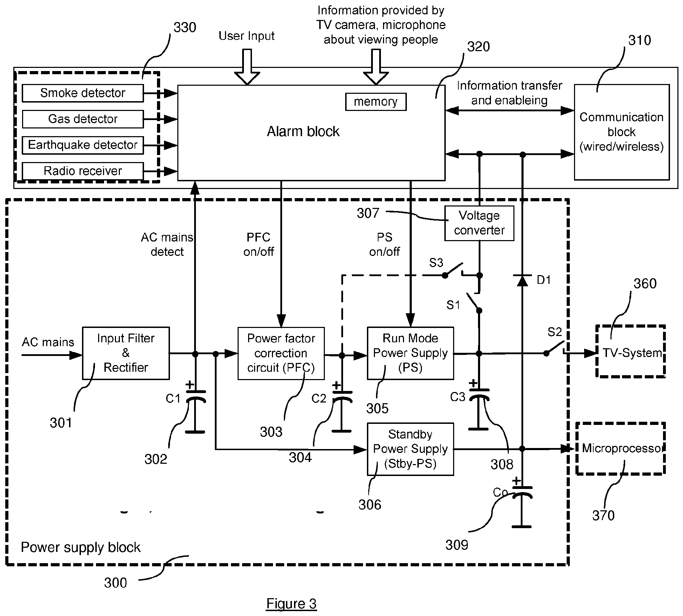

Figure 3 describes a block diagram of an electronic assembly adapted to implement at least one embodiment of the present disclosure, the electronic assembly incorporating at least one communication device as the electronic device 20 illustrated by figure 2.

The electronic device comprises notably a power supply control block 300, a communication block 310, an alarm block 320 and a sensing block 330. The sensing block 330 is optional. For instance, in some embodiments, instead of comprising sensors, the electronic device can be connected to a sensing block of the electronic assembly.

Depending upon embodiments, the electronic device of the present disclosure can involve one or more microprocessors. For instance, in some embodiments, the alarm block 320 can notably contain at least one low power microprocessor, being a separate microprocessor, distinct for a microprocessor 370 performing the audio and/or video processing services of the electronic device 20 for instance.

Terms "main processor" or "main microprocessor" designates hereinafter the processor 370, or a part of the processor, in charge of performing power consuming services than can be disabled when the electronic device in a low power mode, or standby mode, like the audio and/or video processing services of the electronic device 20 for instance.

The electronic device also comprises power consuming elements, like the microprocessor 370, or the portion of the microprocessor than can be disabled when the electronic device in a standby mode, or elements with audio and/or video processing and/or rendering capabilities, tuners, user interfaces like display. The latest power consuming elements are represented by element 360 of figure 3 (also called herein "TV system" as illustrated by figure 3.

The alarm block (or system) 320 can be for instance a low power consuming circuitry. It can be in charge of performing the method of the present disclosure, including for instance generating an alert what an event is detected by the sensing block 330. Depending upon embodiments, and depending on the state of the communication device 20, the alarm can be rendered locally (by an output user interface (like a display or a loudspeaker) of the communication device 20 or of another device of the electronic assembly for instance) or transmitted to a remote device thanks to the communication block 310.

The sensing block 330 can comprise at least one sensor adapted to provide information about one event that is currently occurring (or has just occurred). For instance, the at least one sensor can belong to a group of sensors comprising a smoke detector, a gas detector, an accelerometer (adapted for instance to a detection of events of earthquake type). It is to be pointed out that the group of sensors is not limited to local sensors. For instance, it can also comprise a radio receiver for receiving radio transmitted emergency calls, like a "9-1-1" alert or a weather alert received from an Emergency Alert System (EMS) via dedicated broadcast channels. Some event (like an alert) can also be received via the communication block 310 from another device, or from a mobile phone.

The communication block can notably comprise communication interfaces (like the communication interfaces 27, 28 of figure 2) that can be of wired or wireless communication interfaces. For instance, the communication block can comprise interfaces adapted to communication inside a wired or a Wireless Local Area Network (WLAN) like interface of Bluetooth © or Wi-Fi type. The communication block can also (or alternatively) comprise interfaces adapted to a connection to other types of networks, notably interfaces adapted to Wide Area Networks, like interfaces adapted to high-speed wireless communication for mobile devices and data terminals, like interfaces of Long-Term Evolution (LTE) type, or interfaces adapted to long range communications like interfaces of Long Range Wide Area Network (LoRaWAN) type (like the LoraWAN module named EMB-LR1272E of the firm Embit).

When the electronic device is an audio and/or video rendering device, the communication block can notably be used for communicating with a loudspeaker, or with a remote-control device.

According to the embodiment of figure 3, the power supply block 300 comprises at least one power storing element 302, 304, 308, 309, comprising (or being constituted of) for instance a capacitor (like capacitors C0, C1, C1, C2, C3 of figure 3). In the illustrated embodiment of figure 3, the power supply block 300 can comprise at least one Input Filter and/or rectifier circuit 301 (adapted notably for reducing emission of electromagnetic spikes and rectifying the alternative current (AC) received from the mains for outputting a direct current. As illustrated by figure 3, the power supply block 300 can also comprise a Power Factor Correction (PFC) circuit 303, adapted for instance to smooth the input current to a sinusoidal (or almost sinusoidal) shape. The PFC 303 can notably include a step-up converter, converting a first input direct current (DC) leading to a first voltage at terminals of a first power storing circuit 302 (like the input filter capacitor C1 for instance) to a second output direct current, leading to a second voltage at terminals of a second power storing circuit 304 (like the output storage capacitor C2 of the PFC for instance). For instance, the first voltage can belong to a range of [0; 500V] (like 100V, 150V, 200V, 250V, 300V or 350V) and the second voltage can belong to a range of [0; 700V] (like 300V, 350V, 400V, 450V.

In the illustrated embodiment of figure 3, the power supply block 300 can further comprise at least one Voltage converter 307. It can also comprise at least one Run mode power supply (PS) 305, adapted for transforming an input voltage to at least one output voltage, the value of the output voltage being chosen in order to be adapted to supply power to some power consuming element (like the "main" microprocessor 370, and/or the TV system 360. The Run mode power supply (PS) 305 can be for instance of the flyback-converter or the forward-converter type. According to the embodiment described, the output voltage can take different values depending upon the corresponding power consuming element. For instance, the output voltage can belong to a range of [0; 10V], like 2V, 3V, 4V,5V or 6V for the main microprocessor. According to another exemplar, the output voltage can belong to a range of [0; 35V], like 12V, 20V, 22V, 25V, 27V,30V for one or more backlight LEDs. According to still another exemplar, the output voltage can belong to a range of [0; 70V] like 40V, 50V, 60V for an audio processing device (like an audio loudspeaker for instance). In figure 3, the power storing element 308 (Capacitor C3) stands symbolic as corresponding to all power storing elements associated with a power consuming element. It is to be understood that the electronic device can comprise a plurality of power storing elements each being associated with at least one power consuming element. In such an embodiment, when the power storing elements are capacitors (C3), they can be connected via decoupling elements (like diodes) to an energy controlling element, or switching element (illustrated by switch S1). The decoupling elements decouple the voltages from each other and provide the energy of the storing elements to the switching element. The switching element is controlled by the alarm block 320, for a use of the stored energy either by the emergency circuit and/or the power consuming elements 360, 370.

The voltage converter 307 adapts the voltages coming from the different power storing elements to the alarm block 320.

In the illustrated embodiment of figure 3, the power supply block 300 can further comprise at least one Standby power supply circuit (Stby-PS) 306. Such a Standby power supply circuit can be notably adapted for transforming the first (input) voltage at the terminals of the first power storing element 302 (input filter capacitor C1 of figure 3) to at least one third (output) voltage at the terminals of a third power storing element 309 (output Capacitor Co of figure 3). The third voltage can belong notably to a range of [0; 7V], like 2V, 3V, 4V, 5V, 6V. It can be adapted for instance for supplying power to the main microprocessor.

Similarly to the alarm block, the standby power supply block can also contain a separate, low power microprocessor, distinct from the one of the alarm block and/or the main processor.

In other embodiments, however, the alarm block and the stand by power supply block can share a same microprocessor (for instance a low power microprocessor (e.g. a microprocessor of the Atmel Ultra Low Power MCU STM32 family). In still other embodiments, only a single microprocessor can be used for all the system 300.

Following table "Table1" gives, for some exemplary values of capacitors illustrated by figure 3, with some exemplar voltage at the terminals of the corresponding capacitor and the amount of energy stored in the corresponding capacitor.

**Table1**

| Capacitor | Co | C1 | C2 | C3 |
|---|---|---|---|---|
| Value | 220uF | 1uF | 100uF | 500uF |
| Voltage | 5V | 300V | 400V | 25V |
| Energy stored (=Voltage²Value/2) | 2.75mWs | 4.5mWs | 8Ws | 0.156Ws |

In some embodiments, the power supply block 300 can also comprise at least one energy controlling element (or switch) like a mechanical switch or relay, a semiconductor (MOS-FET) or a digital enabling/disabling function, which permits to the processor of the alarm block to control an energy flow in at least one power consuming elements 360, 370. For instance, according to figure 3, the power supply block comprises 3 switches S1, S2 and S3 (being either of the mechanical type or the solid or semiconductor type). It is to be noted that, in embodiments where an enabling/disabling function is already used for switching the TV-system 360 and/or the microprocessor 370 (if controlled separately) between run-mode and standby mode (upon a user action on a remote-control device for instance), the enabling/disabling function being adapted to avoid the occurrence of a low idling current, the switch S2 of figure 3 can be optional (its function being performed by this enabling/disabling function).

Even if not illustrated for a sake of simplicity, mains separation can be performed inside the power supply 305 by use of a transformer. Similarly, voltage converter 307 can be equipped with a transformer or a capacitive mains separation in order to ensure mains separation when the switch S3 is used for feeding power to the voltage converter (307).

The microprocessor of the alarm block can be adapted for instance for implementing at least some embodiments of the method of the present disclosure. As explained above, depending on the embodiments, the microprocessor of the alarm block can be a dedicated microprocessor, in charge for instance of the processing of the electronic device in its standby mode, distinct from the microprocessor in charge of the processing of the electronic device in its run mode, or a part of the latest.

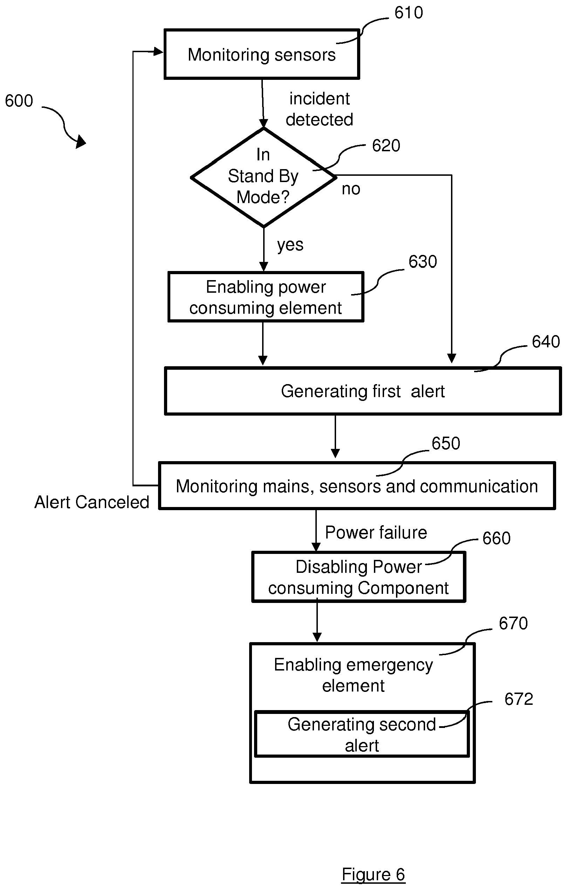

**Figure 6** shows an exemplary embodiment of the method 600 of the present disclosure, that can be implemented for instance in the electronic device 20 of figure 2. Depending upon embodiments, the method can be implemented for instance in an application (contained for instance in the alarm block 320) that is launched automatically when the electronic device 20 is turned on, or after a specific action of a user on the electronic device (and optionally also on the sensors themselves).

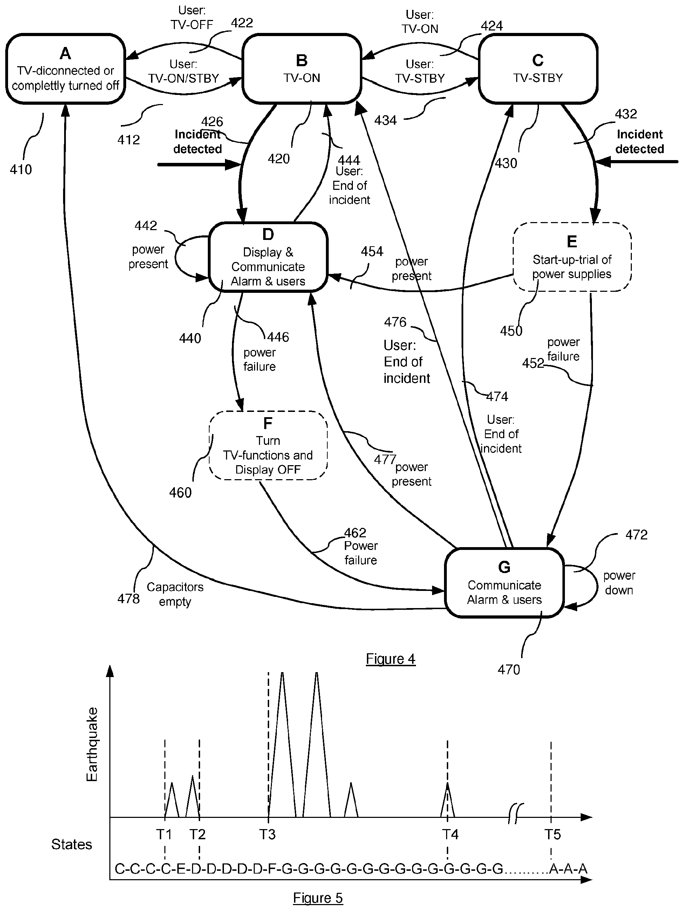

**Figure 4** describes a state diagram explaining the behavior of the application, in link with blocks already described of figure 3, in order to implement for instance, the exemplary embodiment illustrated by figure 6.

According to the illustrated embodiment, the method 600 can comprise monitoring 610 the information received from the sensing block 330 (and/or the communication block 310).

If the illustrated embodiment, the monitoring 610 can start when the electronic device (herein the TV set 130 for instance) is turned on by a user, as illustrated by transition 412 from state A 410 to state B 420 in figure 4, and can end when the TV is turned off (as illustrated by transition 422 from state B 420 to state A 410 in figure 4). This monitoring can be performed continuously, (by HW interruptions mechanisms for instance), in order to detect abnormal events (or incidents) as soon as possible. In other embodiments, it can be performed periodically.
When no abnormal event (or incident) is detected by the sensing block 330 or the communication block 310, the state of the TV set can alternate between state B 420 (where the electronic device in a normal, operational, run mode) and C 430 (where the TV set in a stand-by mode, where at least some of its components, like a power consuming element is, at least partially, disabled. In the exemplary embodiment illustrated, where the electronic device is a TV set, the "run mode" can correspond to the TV being turned on, the display rendering a TV program or a recorded movie, or a speaker rendering an audio content, or a recording of an audio and/or video content in in progress. The Standby mode can correspond to a TV having at least one of its function turned at least partially off (except notably the element in charge of an observation of the remote control).

The transitions 424, 434 between both states can be initiated for instance by an action of a user on the remote-control device 132 for instance.

In reference to figure 3, when the TV set is in "run mode" (state B 420), the switch S2 is closed and thus the power supply block 300 supply power to the TV system (or block) 360. The alarm block 320 can be powered via the diode D1 from the Stby-PS circuit 306. In a variant (not illustrated), it can be powered from the run mode power supply circuit 305.
When the electronic device is in the standby mode (state C), switches S1 and S2 are open, the PFC 303 and the PS 305 are turned off. In the illustrated embodiment, the alarm block 320 is still powered by the Stby-PS circuit 306. Thus, the alarm block (or emergency element) is still capable of listening to the sensors and/or to the communication block, where an alarm message (from another device of the domestic environment notably) might be received.

When an incident appears, the processing can differ (620), depending on the current state of the electronic device, and more precisely depending if the electronic device is in stand-by mode or not (620). If the electronic device is in standby mode (state C), the TV enables 630 (in other words starts a power supply) at least one of the power consuming element that is disabled in the stand-by mode. This is illustrated in figure 4 by transition 432 from state C 430 to state E 450. Depending upon embodiments, only some of the power consuming elements (for instance the n elements consuming the most power), or all of the power consuming elements can be started up. The enabling of the power consuming element(s) permit to harvest energy in some power storing elements, like capacitors C2 304 and C3 308 of figure 3. When the start-up is successful, while the power is still present, a transition 454 to state D 440 is made.

In the detailed embodiment of figure 6, the method 600 can comprise 640 generating a first alert. With reference to figure 4, the generating of the first alert can be performed when the TV set is in state D 440, for instance after the start up detailed above (transition 454), or because the electronic device was in a run mode (state B 420) when the incident has been detected (transition 426).

Depending upon embodiments, the way the first alert is generated can differ. The method can notably comprise alerting locally a user of the TV set, by turning on at least some of TV functions for informing the user for instance, and/or rendering a visual message on a display of the TV set, and/or rendering an audio alarm of a loudspeaker associated with the TV set. Generating a first alert 640 can also comprise updating a log file in a memory of the TV set and/or sending an alerting message via the communication block 310 of the electronic device to another device (for instance nearby device or station as another TV set 170, a tablet 160, a STB 140 or a gateway 110 as illustrated by figure 1) in the local area network of the communication device, or to another device of a WAN device accessible from the gateway 110. TV users are informed directly, and an alert is transmitted to nearby stations.

In the exemplary embodiment of figure 3, as the power is still present, the generating of the first alert can even use power consuming elements of the TV set (for instance the display of the TV set can used for alerts). Furthermore, at least some of the power consuming elements can continue to be used normally for the operating of the TV set.

For instance, a textual alert can be rendered on the display while a movie still continues to be shown of the display. Indeed, the detection of an incident during run mode can keep the TV running, as long as the mains is supplied.

In the illustrated embodiments of figure 4 and 6, the first alert can be generated once, continuously, or periodically, when the power is still present, until the incident is closed, either automatically or by a user action, or a power failure happens.

In the embodiment of figure 6, the method 600 can comprise monitoring 650 the mains (transition 442). Indeed, in some embodiments where the electronic device is still using at least one very power consuming element, it can be important to detect the power failure immediately (or almost immediately) in order to disable (or shut down) the power consuming element immediately (or almost immediately).
The monitoring of the mains can be performed thanks to a AC mains detector element (not illustrated) of the power supply circuit of figure 3 for instance. This AC main detector can be a component used for another feature of the TV set, like a "controlled shut- down" element of the TV. In some embodiments, the mains detector can for instance sense a Direct Current at the terminals of the capacitor C1 302 or the Direct Current at the terminals of a separate capacitor and output a signal when the voltage drops below a first value (used as a threshold value). In some other embodiments, where the mains detector is implemented by a more elaborate circuit, the mains detector can even monitor the AC-curve of the AC supplied to the TV set. The monitoring 650 can also include monitoring the sensing block and/or the communication block.

In the exemplary embodiment illustrated (transition 444 from state D to state B for instance), a processing of an incident can be terminated (in other words the incident or event is closed or ended) by an explicit action of a local user (using the remote-control device 132 or the TV set itself for instance) or of a remote user via the communication block 310 of the electronic device or by detecting an occurrence of another event. It can also be closed automatically after a time spent in state D without any power failure or explicit action of a user. In such an embodiment, a timeout can be armed upon entering in state D 440.

Depending upon embodiments, when an incident is closed, the TV set can revert to its previous mode at the time of the detecting of the incident (as illustrated in the exemplary embodiment of figure 4 by transition 444 from state D to state B or transition 474 from state G to state B), or to a given mode (like the run mode as illustrated in the exemplary embodiment of figure 4 by transition 444 from state D to state B or transition 476 from state G to state B or transition (optional) 477 from state G to state D then transition 477 from state D to state B).

In case of power failure (detected during the monitoring 650 of the mains), the method 600 can comprise disabling 660 at least one power consuming component. According to figure 4 for instance, as soon as the mains fails, all power consuming elements not necessary for the operation of an emergency circuitry can be shut down (transition 446 from state D 440 to state F 460 then transition 462 from state G 470). Indeed, disabling or turning off some unnecessary functions (notably function performed by some power consuming element, like a display and/or a video and /or audio processing element) can permit to conserve some energy on capacitors C2 304 and C3 308, that can be used for powering elements of the emergency circuitry (like, at least partially, the alarm block and the communication block)

Of course, the method can also comprise the disabling or turning off at least some (for instance all) power consuming elements unnecessary to the emergency circuitry that are already started-up in situation when the power failure occurs while the electronic device is trying to start-up the power consuming elements (transition 452 from state E 450 to state G 470).

The emergency element can notably include the alarm block 320 and the communication block 310 of figure 4.

Once the disabling of the power consuming element(s) has been performed (the electronic device staying (transition 472) in an energy conserving state G 470), the energy remaining on the capacitor(s) can be preserved, in order to be further used by the emergency element notably. As illustrated by figures 4 and 6, the method can comprise for instance generating 672 a second alert to some other devices (either nearby devices or remote devices). With reference to Figure 3, the energy necessary for the operation of the emergency element can be obtained by operating energy controlling elements (like switches) inside the power supply block 300. For instance, the closing of the switch S1 can permit to take the energy from the capacitor C3 308 (for instance a voltage of 20V, 25V or 30 V) or, alternatively, the closing of the switch S3 can permit to take the energy from the capacitor C2 304 (for instance a voltage of 350 V, 400V or 450 V). As mentioned above, the mains separation is omitted in figure 3 and in the exemplary embodiment illustrated, switches S1 and S3 cannot be closed together. Notably, it some embodiment, only the Switch S1 can be closed for using the energy stored in C2 via the power supply 305.

In the illustrated embodiment, the power supply block 300 can comprise a voltage converter in charge of transforming voltages (input to the voltage converter) in output voltage of lower values (than the voltage input to the voltage converter) The transformed output voltage can then be supplied to the alarm block 320 and/or the communication block 310. Thus, the alarm block can generate a second alert that can be transmitted, via transmitters of the communication block 310 to other devices and/or to a centralized reception device, and notably to authorities.

As generating the second alert is performed when the system is about running out of energy, the generating of the second alert can be performed by using the elements of the electronic device inducing the lowest energy consumption. For instance, an intermittent tweeting speaker or a call to a mobile phone (the one of the user or the one of a different user) uses much less energy than a TV screen. Notably, concerning the elements of the communication block 310, interfaces of Long Range Wide Area Network (LoRaWAN) type, adapted to extreme long range and low power transmissions, or Bluetooth type can be preferred to communication interfaces consuming more energy like interfaces of WLAN type.

Following table "Table2" gives, for some exemplary values of the energy consumption of different type of communication interface modules and the energy consumption of an exemplary Low-power alarm processor

**Table2**

| Communication type | LoRa WAN | Bluetooth | WLAN | LTE |
|---|---|---|---|---|
| Range | 2-20km | 10-20m | 50-200m | 5-10km |
| Transmitting power | 10mW | 10-100mW | 100-200mW | <2W |
| Transmission time | <100ms | 6-10ms | 10ms | <. 100ms |
| Energy consumption | 1mWs | 0.5mWs | 2mWs | <200mWs |
| Low-power alarm processor | 100uA, 3V=300uWs | | | |

A comparing between the values shown by Table 2 and the energy stored by capacitors of table1 shows, for instance, that the energy stored in a power storing element like the capacitor C3 can be sufficient for operating a communication block using a Bluetooth interface for transmitting permanently about 1 hour. Similarly, the energy stored in a power storing element like the capacitor C2 can be sufficient for operating the same communication block for several hours (for instance more than 4 hours) At the opposite, the energy stored in a power storing element like the capacitor C0 will only be sufficient for operating the same communication block for few seconds (like 5, 8, 10 or 15 seconds), thus being more usable for transmitting a single alert than for multiple alert communications.

A mobile phone transmitter (without display) can several minutes while transmitting permanently with the energy stored by Capacitors C2 and C3.

At the opposite, when a power failure happens while the TV set is in standby, if the innovative solution of the present disclosure was not implemented, the capacitor Co would have been emptied within seconds by the standby processor. Similarly, when a power failure happens while the TV set is in run mode, if the innovative solution of the present disclosure was not implemented, the power consuming functions of the TV (like the display) would stay activated and thus would drain the capacitors in less than a second.

In some embodiment of the present disclosure, the second alert can be generated by intermittence, for instance periodically, as long as some energy is still available (for instance, in reference with transition 478 to state A 410 of figure 4, until all capacitors are emptied.

In some embodiments, where built-in cameras, a microphone or a user panic-button (on the remote control) can be used for detecting a presence of a "person in danger", the method can comprise storing, in a memory that can be accessed by the alarm block 320, information about the user present in the environment of the electronic device and /or their location. The storing can for instance be performed periodically, or each time a user activates a panic-button. In such an embodiment, the first and /or the second alert can comprise at least some of the stored information related to the presence of the users. Such an embodiment can help rescue teams selecting the right place for search, by following the location of the origins of the alarms.

The first and the second alerts can notably comprise one or more of the following information: time, place, kind of incident, estimated number of people, power situation, history of incident (eg. power-loss, last life-sign of people (like Remote-Control pressures), remaining energy.

Figure 5 illustrates an exemplary use case of the present disclosure, in case of an occurrence of an exemplary incident of earthquake type. Figure 5 shows the intensity of the shock waves that can be detected by sensors at the moment of an earthquake. Most earthquakes come in clusters and generate a pre-shock wave (that correspond to times T1 and T2 of figure 5), followed by a main-shock (at time T3) and by an after-shock (at time T4). For a successful alarming, the detection of the pre-shocks that occur at T1-T2 is important. Usually, during the short time interval (of several seconds for instance) between the first pre_shock wave and the main shock wave (time interval [T1 ;T3]), no real damage is done. At least some embodiments of the present disclosure can enable to start up a power supply of the device, generate a first alert and cumulate enough energy for operating autonomously during a while after the time T3 where the mains is down because of destroyed lines and power plants.

Figure 5 also represent some states of the electronic device, in link with figure 4 at different instants at the time of the earthquake.

Some embodiments of the present disclosure have been described herein above in link with the block diagrams illustrated by figure 3. It is to be noted that those block diagrams have only a functional purpose and do not necessary correspond to physical distinct elements of the electronic device. Some variants are detailed hereinafter in link with figured 7 and 8.

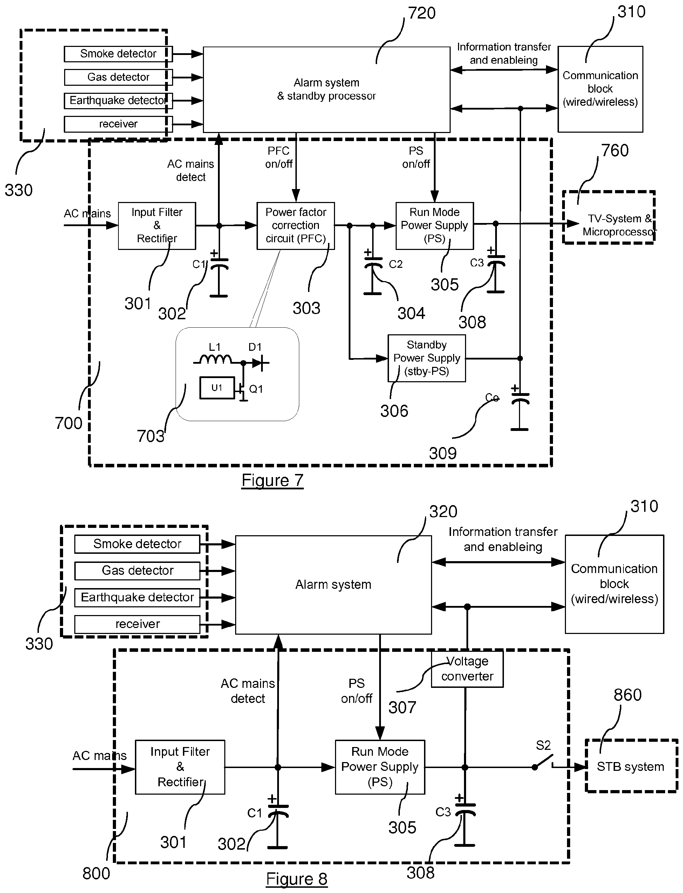

In the exemplary embodiment illustrated by figure 7, the electronic device is a TV set for instance. The block diagram illustrated by figure 7 is almost similar to the block diagram of figure 3. Identical elements in both figures have kept the same numeral reference. The alarm block 720 of figure 8 can comprise a standby processor. Furthermore, In the variant illustrated by figure 7, the disabling (or turning off) of at least one of the power consuming element (for instance the audio and/or video processing part of the TV set or the main microprocessor) can be performed by disabling the run-mode power supply 305. At the difference from the block diagram illustrated by figure 3, capacitor C3 308 cannot be used for collecting energy. However, in the illustrated embodiment, as in the illustrated embodiment of figure 3, it is useful to turn on the power factor correction circuit as long as the mains is present. Indeed, turning on the Power factor correction circuit 303 can then permit to charge the capacitor C2 when the power factor correction circuit is turned off. For instance, the energy stored by C2 can be doubled when the voltage at its terminal rises by a factor of 1.4 (from 300V to 420V or even higher, for instance).

The detailed picture 703 shows a step-up converter that can be included in the power factor correction circuit 303, comprising a MOSFET transistor switch Q1, controlled by element U1, an inductor L1 and a diode D1. The switch Q1 is closed and opened (for instance periodically). When Q1 is closed, the energy stored in the capacitor C1 transferred via the diode D1 to L1. When Q1 is opened, the energy flows to capacitor C2, thus increasing the voltage at C2.

In the exemplary embodiment illustrated by figure 8, the electronic device is a set top box (STB) for instance. Notably, the STB can be implemented without any separate standby power supply (as it is the case in the embodiment illustrated by figure 3). The STB can also be implemented in some embodiments without a power factor controller (because of a low power consumption, like a power consumption being below 50W, for instance). In such an embodiment, the voltage at the capacitor C3 becomes the only power reservoir usable by the alarm block 820. The switch S2 permits to control the enabling and the disabling of one or more (for instance all) power consuming element(s), which operation is not necessary to an emergency circuitry, in order to be able to fill the capacitor C3, when an incident is detected, by enabling the one or more power consuming element(s), and to disable one or more (for instance all) power consuming element(s) not necessarily to the operating of the emergency circuitry.

The present disclosure has been described in relation with a particular protocol. Of course, as it can be understandable by a person skilled in the art, the present disclosure can also be applied to an electronic device comprising a communication block using other communication protocols than the one described herein.

As can be appreciated by one skilled in the art, aspects of the present principles can be embodied as a system, method, or computer readable medium. Accordingly, aspects of the present disclosure can take the form of a hardware embodiment, a software embodiment (including firmware, resident software, microcode, and so forth), or an embodiment combining software and hardware aspects that can all generally be referred to herein as a "circuit", "module" or "system". Furthermore, aspects of the present principles can take the form of a computer readable storage medium. Any combination of one or more computer readable storage medium may be utilized.

A computer readable storage medium can take the form of a computer readable program product embodied in one or more computer readable medium and having computer readable program code embodied thereon that is executable by a computer. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing.

It is to be appreciated that the following, while providing more specific examples of computer readable storage media to which the present principles can be applied, is merely an illustrative and not exhaustive listing as is readily appreciated by one of ordinary skill in the art: a portable computer diskette, a hard disk, a read-only memory (ROM), an erasable programmable read-only memory (EPROM or Flash memory), a portable compact disc read-only memory (CD-ROM), an optical storage device, a magnetic storage device, or any suitable combination of the foregoing.

Thus, for example, it can be appreciated by those skilled in the art that the block diagrams presented herein represent conceptual views of illustrative system components and/or circuitry of some embodiments of the present principles. Similarly, it can be appreciated that any flow charts, flow diagrams, state transition diagrams, pseudo code, and the like represent various processes which may be substantially represented in computer readable storage media and so executed by a computer or processor, whether such computer or processor is explicitly shown.

## Claims

1. A method, adapted to be performed in an electronic device comprising at least one power consuming element and at least one power storing element adapted to store power when said power consuming element is in an operational state, said method comprising controlling a switching of said power consuming element to said operational state upon detecting an event that may result in a power supplying failure, so as to permit to said power storing element to store power before an occurrence of a power failure.

2. The method of claim 1 wherein said power storing element is associated to said power consuming element, said power storing element being adapted to store power necessary to said power consuming element.

3. Electronic device comprising
- at least one power consuming element;
- at least one power storing element being adapted to store power when said power consuming element is in an operational state;
- at least one processor configured for controlling a switching of said power consuming element to the operational state upon detecting an event that may result in a power supplying failure, so as to permit to said storing element to store power before an occurrence of a power failure.

4. The electronic device of claim 3 wherein, when said at least one processor is configured for disabling said power consuming element of said electronic device in case of power supplying failure, while keeping an emergency circuitry of said electronic device in an operational state, said emergency circuitry being adapted to generate an alert relating to said event.

5. The electronic device of claim 4 wherein said at least one processor is configured for controlling a power adaptor element of said electronic device, said power adaptor element being adapted to receive power stored by said power storing element and to supply power to said emergency circuitry.

6. The electronic device of claim 4 or 5 wherein said emergency circuitry is a low power consuming circuit.

7. The electronic device of any of claims 4 to 6 wherein said at least one processor is configured for generating a first alert by using said power consuming element when mains is still supplied and for generating a second alert using said emergency circuitry in case of power failure.

8. The electronic device of claim 7 wherein generating said first alert comprises rendering an alarm on an output interface of said electronic device.

9. The electronic device of claim 7 or 8 wherein generating said first and/or said second alert comprises sending an alert message via at least one first communication interface of said electronic device.

10. The electronic device of claim 9 wherein said first communication interface is consuming less power than a second communication interface of said electronic device.

11. The electronic device of claim 9 or 10 wherein said alert message comprises information about at least one user of said electronic device.

12. The electronic device of any of claims 3 to 11 wherein said power consuming element comprises an element with audio and /or video processing capabilities, a display and/or a microprocessor.

13. An electronic assembly comprising:
- a first electronic device comprising at least one power consuming element, at least one power storing element being adapted to store power when said power consuming element is in an operational state, and at least one processor;
- at least one sensor adapted to transmit to said first electronic device at least one information representative of a detection of said event;
wherein said at least one processor is configured for controlling a switching of said power consuming element to the operational state upon detecting an event that may result in a power supplying failure, so as to permit to said storing element to store power before an occurrence of a power failure.

14. A non-transitory computer readable program product comprising program code instructions for performing, when said non-transitory software program is executed by a computer, a method adapted to be performed in an electronic device comprising at least one power consuming element, and at least one power storing element adapted to store power when said power consuming element is in an operational state, said method comprising controlling a switching of said power consuming component to its operational state upon detecting an event that may result in a power supplying failure, so as to permit to said storing element to store power before an occurrence of a power failure.

15. Computer readable storage medium carrying a software program comprising program code instructions for performing, when said non-transitory software program is executed by a computer, a method adapted to be performed in an electronic device comprising at least one power consuming element, and at least one power storing element adapted to store power when said power consuming element is in an operational state, said method comprising controlling a switching of said power consuming element to the operational state upon detecting an event that may result in a power supplying failure, so as to permit to said storing element to store power before an occurrence of a power failure.
